# EUROPEAN PATENT APPLICATION

(11) **EP 2 990 944 A1**
(43) Date of publication of application: **02.03.2016**
(21) Application number: 14002962.0
(22) Date of filing: 27.08.2014
(51) Int. Cl.: G06F 9/50

(54) **Method for coordinating a service topology in a cloud-computer network**

(71) Applicant: Deutsche Telekom AG, 53113 Bonn (DE)
(72) Inventor: Holmes, Ta'id, 63477 Maintal (DE)
(74) Representative: Hössle Patentanwälte Partnerschaft

(57) **Abstract**

The present invention relates to a method for coordinating a service topology in a cloud-computer network, wherein at least one first domain specific language is used to describe a number of roles, files and services for a particular service topology and wherein models of particular roles are generated using the at least one first domain specific language and wherein the models of the particular roles are transformed into coordination and provisioning tools for synchronizing workspaces used by the particular roles and for producing notifications for informing the particular roles using a version control system and wherein at least one second domain specific language is used to produce a script that automates packaging, uploading and deployment of respective services in the cloud-computer network for provisioning the services to the respective workspaces and wherein dependencies that require synchronization between roles and/or services that consume files, and roles and/or services that produce files, are translated into publish/subscribe patterns.

## Description

The invention relates to a method for coordinating a service topology in a cloud-computer network and a serverfarm that is configured based on the provided method.

In a model-driven engineering (MDE) process, different roles are incorporated, each generally working with a distinct set of artifacts. For example, a textual or graphical domain-specific language (DSL) can offer an access for specifications of aspects of an enterprise application. Since model transformations are automatic in MDE, regeneration is cheap and can take place continuously. In case of a service topology, i.e., a set of services that depend on each other and that are specified and developed by a multitude of roles, a challenge of minimized turnaround circles re-emerges. This is because development needs to be coordinated and deployment of software as part of the service topology is complex.

In fact, coordination of various roles during development, their deliverables, and application deployment are not covered by MDE methodology. For example, a model change undertaken by an enterprise architect may have an impact for certain developers working with applied transformations. That is, the model change needs to be propagated and communicated. This is costly in terms of time and creates an overhead to a respective engineering project. Ideally, all roles participating in the engineering process would be timely notified and provided with models or appropriate transformations. In this regard, it must also be considered that different developers may work with different technologies. That is, a code generator needs to be selected according to a respective target technology, such as a programming language or a format.

Against this background, a method for coordinating a service topology in a cloud-computer network is presented, wherein at least one first domain specific language is used to describe a number of roles, artifacts and services for a particular service topology and wherein models of particular roles are generated using the at least one first domain specific language and wherein the models of the particular roles are transformed into coordination and provisioning tools for synchronizing workspaces used by the particular roles and for producing notifications for informing the particular roles using a version control system and wherein at least one second domain specific language is used to produce a script that automates packaging, uploading and deployment of respective services in the cloud-computer network for provisioning the services to the respective workspaces and wherein dependencies that require synchronization between roles and/or services that consume artifacts, and roles and/or services that produce artifacts, are translated into publish/subscribe patterns.

The at least one first domain specific language and the at least one second domain specific language can be equal or differ from each other.

In the context of the present invention a service topology in a cloud-computer network means a set of interrelated services, such as programs that are provided by using a cloud-computer network comprising a number of servers that are controlled via an internet connection of a workspace by a particular user.

The present method can be used to coordinate software and services that are performed on particular servers of a cloud-computer network. Thus, the present method enables configuration of a number of servers according to specific needs of particular roles in an engineering project by means of an automatic procedure.

A domain specific language is a computer language that is not abstract but rather concrete, such that commands within a particular domain specific language are directly linked to a specific function, which enables a very simple programming of desired functions.

The term "role" describes in the context of the present invention a model of a member of a project team such as a software engineer that produces and consumes artifacts, i. e. files.

A version control system is a software unit that manages changes of particular artifacts in a system, such as a cloud-computer network, by storing all versions of the particular artifacts, in a temporary repository for later provisioning. Thus, a version control system can be used to log changes of a particular artifact in a respective changeset and to inform particular users about updates that have been applied to the particular artifact.

The present method is based on descriptive DSLs for facilitating a coordinated development and automated deployment of service topologies. Thus, the descriptive DSLs are presented for declaring artifacts, roles, services and their dependencies. A description of an engineering project as expressed in one or more DSLs, i.e. DSL programs, serves as a basis for generating coordination and automation tools. Those tools synchronize workspaces, produce notifications and prepare the provisioning of service topologies and perform their deployment.

In the context of the present invention the term "service topology" refers to services defined in a DSL. For describing a service topology at a high level of abstraction, a DSL is used using Xtext's import statement that makes use of languages referencing for realizing separation of concerns and for making definitions reusable across service topologies by using elements, such as rules, across different DSLs.

Using such a DSL, a hosting unit can be used to specify services of a particular service topology. After code generation, the hosting unit can be mapped to a server instance or a cluster, using an infrastructure as a service (IaaS) provider.

The services which are grouped in hosting units may reference previously defined services (e.g., software as a service (SaaS) as part of an enterprise application) or relate to general services (e.g., platform as a service (PaaS)). Services may depend on other services forming a service stack. For not exposing particular services publicly, they can be labeled as internal.

Dependencies between hosting units, services and their dependent artifacts, i.e. files, may be used for easing the provisioning of the service topology. According to the provided method, an artifact a service depends on can be retrieved from a particular workspace of a particular role that produces the artifact and can then be placed in a Puppet module, in favor of provisioning the service topology.

Further, a hosting unit may be transformed into a Puppet node definition that includes Puppet modules for services. For this, a transitive closure of services contained in a particular hosting unit may be calculated. For services that are not labeled as internal, enabling security rules are generated for respective ports. By executing a generated script that utilizes infrastructure as a service (IaaS) clients, the infrastructure as a service (IaaS) of the service topology may be provisioned.

A management server, acting as a Puppet master server, distributes and deploys configuration and software to clients using Puppet software. For this, cloud-init directives for configuring the Puppet clients may be passed as userdata when launching server instances. Thus, userdata are passed to particular servers during a starting procedure. Based on the userdata, Puppet clients can be installed and configured on the particular servers, enabling a configuration of software and services on the particular servers according to the Puppet master server.

Puppet is a state of the art software that enables an automatic provisioning of client server instances according to a master server.

In an embodiment of the present method, a script is triggered that pushes incremental changes to a respective infrastructure as a service (IaaS), when changes occur in a particular workspace. This minimizes turnaround circles and facilitates iterative development and continues delivery. As already mentioned before, coordination, development and provisioning of software and services needs to be facilitated in order to minimize turnaround circles. Thus, dependencies within engineering processes have to be known. For formalizing such dependencies, the invention proposes a model based approach using DSLs.

For formalizing dependencies with engineering processes, roles, artifacts, services and service topology have to be described in particular DSLs. Conforming DSL programs are parsed and their models are transformed into coordination and provisioning tools.

Coordination and provisioning tools comprise tools for synchronizing workspaces and for producing notifications for informing roles. For provisioning a particular service topology, in an embodiment of the present method, a script is generated that automates packing, uploading and deployment of respective services.

It is preferred to use a MDE server for management purposes and for realizing use cases in a service oriented fashion. Thus, the MDE server has to comprise a repository for managing MDE artifacts, i.e. metamodels and models as well as services, for realizing MDE activities such as model transformations.

According to an embodiment of the present method, use cases can be managed by registering a DSL program for a service topology of a particular project at a particular MDE server. Invoking a generated service, the respective workspaces are then initialized in a version control system (VCS). In addition, tools are deployed that interact with the MDE server and notify roles depending on artifacts that are contained in a particular changeset. Finally, for the provisioning of the service topology, the workspaces are processed for preparing provisioning of software and services and services are packaged, uploaded and deployed.

For the description of roles, artifacts and services, a grammar from an external DSL may be defined using, for example, Eclipse Xtext's framework. A generated DSL editor that offers syntax highlighting, code completion and validation permits to describe various roles, artifacts and services in a textual manner.

Within the scope of the present invention, an artifact represents one or more files. A file as well as an artifact may specify a (meta-)artifact, e.g., for indicating a type or format. A role states what artifacts it consumes and produces.

A service may depend on some of the artifacts (of particular roles). Roles and services may specify a transformation format or serialization for referenced artifacts. Artifacts may be referenced by a particular role in order to specify artifacts that are consumed or produced by that particular role.

Model transformations exist for models (or DSL programs) conforming to metamodels (or DSLs). Workspace synchronization can be achieved by stating which artifacts are produced or consumed by roles and services of a particular project. Thus, a respective descriptive DSL program implicitly defines dependencies that require synchronization. These dependencies can directly be translated into publish/subscribe patterns of enterprise applications or service topologies.

From a developer point of view, there is a need to communicate with enterprise architects when a change relating to a model is desired. Such a procedure ensures governance over a system and strengthens collaboration between different stakeholders of a particular project through the generated synchronization tools.

In a further embodiment of the present method, maintenance of a particular model can be achieved by analyzing the version control system and by taking results of the analysis as a reference for artifacts that are produced by a particular role.

According to another embodiment of the present method and as already shortly described before, a server, particularly a MDE server that comprises a repository for managing artifacts and services is used for managing changesets of artifacts created by workspaces of particular roles, wherein in a first step, a program created by using the at least one first domain specific language is registered at the server and wherein, in a second step, particular workspaces are initialized in the version control system that is running on the server to invoke a generated service and wherein the coordination and provisioning tools are deployed to interact with the server and to notify the particular roles depending on artifacts contained in a respective changeset.

By updating a particular changeset via the coordination and provisioning tools, the respective changeset can be used to inform all roles that produce and/or consume a particular artifact, about changes that have been performed on the particular artifact.

According to another embodiment of the present method, particular publish/subscribe patterns are integrated into the version control system. Such publish/subscribe patterns are further described, for example, in "Design patterns: Elements of Reusable Object-Oriented Software", Erich Gamma, ISBN_10: 0201 6336 12.

Publish/subscribe patterns that comprise information about which role consumes and/or produces or changes a particular artifact can be used to create a mailinglist comprising particular roles that have to be informed about a change applied to a particular artifact. Thus, publish/subscribe patterns specify dependencies between a number of roles and can be used to automate communication between the number of roles related to such a particular artifact.

According to another embodiment of the present method, for all transformation formats that are specified by particular users, required model transformations are applied by invoking respective services from the server and wherein resulting artifacts are provided to respective roles by placing them into respective workspaces.

According to another embodiment of the present invention, an artifact, a particular service depends on, is retrieved from a workspace of a role that produces the artifact and placed into a Puppet module, wherein a hosting unit is transformed into a Puppet node definition that includes Puppet modules for services by calculating a transitive closure of the services contained in the hosting unit.

For the provisioning of a particular service, a Puppet module and/or userdata can be used, wherein a relation between a hosting unit and particular services is mapped by a Puppet node definition for particular Puppet modules. Thus, the Puppet node definition references Puppet modules of services that have to be provided by developers of a particular project.

For automating service provisioning for workspaces that are involved in a processing of a particular artifact, a Puppet module can be used based on a hosting unit specified by a domain specific language, wherein the hosting unit is transformed into a Puppet node definition. Based on a particular Puppet module, a number of services specified in the hosting unit can be initialized in particular Puppet clients. Thus, the Puppet clients provide the services specified in the hosting unit.

According to another embodiment of the present method, a script is triggered that pushes incremental changes to an infrastructure as a service (IaaS) provider in the case that changes occur in a particular workspace.

For changing an infrastructure of a particular cloud-computer network, changes in particular workspaces can be used to calculate an amount of desired computational power or storage volume. Information about the computational power or storage volume can be used to provide respective computational power or storage volume in the form of particular servers or server modules in a dynamic way. This is, particular servers of an infrastructure as a service (IaaS) provider can be allocated to a particular project of a user that has a high demand of computational power and be removed from a project of a user that has a low demand of computational power.

According to another embodiment of the present method, every role of a particular service topology is described by its own model and every role uses its own workspace. For synchronization of a workflow between different roles in an engineering project, their respective models have to be described with their own service topology for their own workspace, such that synchronization can be performed based on services specified for particular workspaces.

Further, the present invention relates to a serverfarm comprising a number of servers, wherein at least a part of the number of servers is configured with software and services that are coordinated between a number of roles according to the provided method.

Further features and implementations will become apparent from the description and the accompanying drawings.

It will be understood that the features mentioned above and those described hereinafter can be used not only in the combination specified but can also be combined in other constellations or used on their own, without departing from the scope and the spirit of the present disclosure.

Implementations are schematically illustrated in the drawings by way of example and are hereinafter explained in detail with reference to the drawings. It is understood that the description is in no way limiting on the scope of the present disclosure and is merely an illustration of various implementations.

Details of one or more implementations are set forth in the accompanying drawings and the description below. Other features will be apparent from the description and drawings, and from the claims.

### Brief description of the drawings

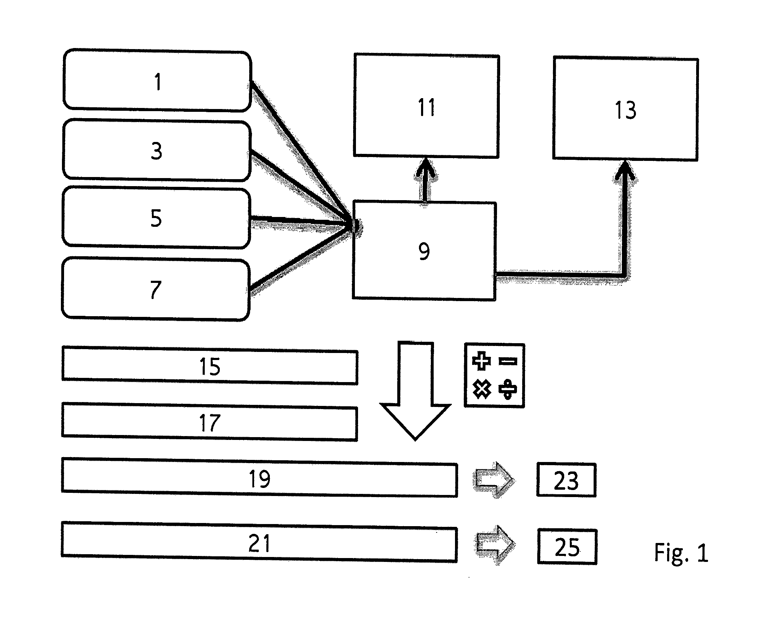

Figure 1 shows a schematic overview of a processing according to an embodiment of the present method.

Based on roles 1, artifacts 3, services 5 and service topologies 7, a script 9 is created via a domain specific language that is expressed using a respective grammar 11 and written in an editor 13. Dependencies between roles 1, artifacts 3, services 5 and service topologies 7 are specified in script 9 via publish/subscribe patterns.

The script 9 is parsed via a parser 15 and transformed via particular models 17 into coordination tools 19 and automation tools 21, wherein coordination tools 19 are used to update a version control system 23 and the automation tools 21 are used to inform an infrastructure as a service (IaaS) provider 25 of changes that may require a change in a current infrastructure.

## Claims

1. Method for coordinating a service topology in a cloud-computer network, wherein at least one first domain specific language is used to describe a number of roles, artifacts and services for a particular service topology and wherein models of particular roles are generated using the at least one first domain specific language and wherein the models of the particular roles are transformed into coordination and provisioning tools for synchronizing workspaces used by the particular roles and for producing notifications for informing the particular roles using a version control system and wherein at least one second domain specific language is further used to produce a script that automates packaging, uploading and deployment of respective services in the cloud-computer network for provisioning the services to the respective workspaces and wherein dependencies that require synchronization between roles and/or services that consume artifacts, and roles and/or services that produce artifacts, are translated into publish/subscribe patterns.

2. Method according to claim 1, wherein a server that comprises a repository for managing artifacts and services is used for managing changesets of artifacts created by workspaces of particular roles, wherein in a first step, a program created by using the at least one first domain specific language is registered at the server and wherein, in a second step, particular workspaces are initialized in the version control system that is running on the server to invoke a generated service and wherein the coordination and provisioning tools are deployed to interact with the server and to notify the particular roles depending on artifacts contained in a respective changeset.

3. Method according to any one of the preceding claims, wherein particular publish/subscribe patterns are integrated into the version control system.

4. Method according to claim 2 or 3, wherein for all transformation formats that are specified by particular subscribers, required model transformations are applied by invoking respective services from the server and wherein resulting artifacts are provided to respective roles by placing them into respective workspaces.

5. Method according to any one of the preceding claims, wherein roles that are related to changes of particular artifacts are notified by mail.

6. Method according to any one of the preceding claims, wherein an artifact a particular service depends on is retrieved from a workspace of a role that produces the artifact and placed into a Puppet module and wherein a hosting unit is transformed to a Puppet node definition that includes Puppet modules for services by calculating a transitive closure of the services contained in the hosting unit.

7. Method according to any one of the preceding claims, wherein a script is triggered that pushes incremental changes to an infrastructure as a service provider in the case changes occur in a particular workspace.

8. Method according to any one of the preceding claims, wherein every role of a particular service topology is described by its own model and every role uses its own workspace.

9. Server farm comprising a number of servers, wherein at least a part of the number of servers is configured with software and services that are coordinated between a number of roles according to the method according to any one of the preceding claims.

## Amended claims

### Amended claims in accordance with Rule 137(2) EPC.

1. Method for coordinating a service topology in a cloud-computer network, wherein at least one first domain specific language is used to describe a number of roles, artifacts and services for a particular service topology and wherein models of particular roles are generated using the at least one first domain specific language and wherein the models of the particular roles are transformed into coordination and provisioning tools for synchronizing workspaces used by the particular roles and for producing notifications for informing the particular roles using a version control system and wherein at least one second domain specific language is further used to produce a script that automates packaging, uploading and deployment of respective services in the cloud-computer network for provisioning the services to the respective workspaces and wherein dependencies that require synchronization between roles and/or services that consume artifacts, and roles and/or services that produce artifacts, are translated into publish/subscribe patterns.

2. Method according to claim 1, wherein a server that comprises a repository for managing artifacts and services is used for managing changesets of artifacts created by workspaces of particular roles, wherein in a first step, a program created by using the at least one first domain specific language is registered at the server and wherein, in a second step, the workspaces are initialized in the version control system that is running on the server to invoke the respective services by initializing respective workspaces in a version control system, and wherein the coordination and provisioning tools are deployed to interact with the server and to notify the particular roles depending on artifacts contained in a respective changeset.

3. Method according to any one of the preceding claims, wherein particular publish/subscribe patterns are integrated into the version control system by using the patterns to create a mailing list comprising particular roles that have to be informed about a change applied to a particular artifact.

4. Method according to claim 2 or 3, wherein for all transformation formats that are specified by particular subscribers, required model transformations are applied by invoking respective services from the server and wherein resulting artifacts are provided to respective roles by placing them into respective workspaces.

5. Method according to any one of the preceding claims, wherein roles that are related to changes of particular artifacts are notified by mail.

6. Method according to any one of the preceding claims, wherein an artifact a particular service depends on is retrieved from a workspace of a role that produces the artifact and placed into a Puppet module of services that have to be provided by developers of a particular project, and wherein a hosting unit is transformed to a Puppet node definition that includes Puppet modules for services by calculating a transitive closure of the services contained in the hosting unit.

7. Method according to any one of the preceding claims, wherein a script is triggered that pushes incremental changes to an infrastructure as a service provider in the case changes occur in a particular workspace.

8. Method according to any one of the preceding claims, wherein every role of a particular service topology is described by its own model and every role uses its own workspace.

9. Server farm comprising a number of servers, wherein at least a part of the number of servers is configured with software and services that are coordinated between a number of roles according to the method according to any one of the preceding claims.
